# EUROPÄISCHE PATENTSCHRIFT

(11) **EP 2 172 712 B1**
(45) Veröffentlichungstag und Bekanntmachung des Hinweises auf die Patenterteilung: **06.07.2016**
(21) Anmeldenummer: 09171218.2
(22) Anmeldetag: 24.09.2009
(51) Int. Cl.: F24D 17/00, F24D 19/10

(54) **Verfahren zum Betreiben einer Solaranlage**
Method for operating a solar energy system
Procédé destiné à l'exploitation d'une installation solaire

(30) Priorität: 01.10.2008 DE 102008050172
(43) Veröffentlichungstag der Anmeldung: 07.04.2010
(73) Patentinhaber: Robert Bosch GmbH, 70469 Stuttgart (DE)
(72) Erfinder: Lueke, Wolfgang, 48282 Emsdetten (DE); Oomen, Ronald, 7424EP Deventer (NL); Kosok, Juergen, 48565 Steinfurt (DE); Eisen, Thomas, 48493 Wettringen (DE); Hoetzel, Juergen, 61197 Florstadt (DE); Schulte, Uwe, 20144 Hamburg (DE); Helzel, Stefan, 35232 Dautphetal (DE); Warzecha, Andreas, 35460 Staufenberg (DE)

(56) Entgegenhaltungen:
- WO-A1-01/63182
- DE-A1- 4 139 288

## Beschreibung

Die Erfindung betrifft ein Verfahren zum Betreiben einer Solaranlage, insbesondere zur Warmwasserbereitung, nach dem Oberbegriff des Patentanspruches 1.

Bekannt sind aus dem Stand der Technik solare Großanlagen, welche mehrere Verbraucher wie zum Beispiel Wohnungsinstallationen in Mehrfamilienhäusern und dergleichen, mit Solarenergie versorgen. Derartige Großanlagen weisen ein Kollektorfeld auf, welches über einen Kollektorfeldregler geregelt Solarenergie bereitstellt. Der Verbraucher weist einen Energiespeicher und/oder eine Übergabestation auf, beispielsweise für jeden Unterverbraucher, wie einer Wohnung in einem Mehrfamilienhaus. Um die Abnahme durch den Verbraucher zu regeln, weist auch der Verbraucher einen Verbraucherregler auf, welcher zusammen mit dem Kollektorfeldregler ein Regelsystem bildet. Bei derartigen Großanlagen ist jedem Verbraucher ein Reglermodul für den solaren Ertrag zugewiesen. Das Reglermodul des Verbrauchers kommuniziert mit dem Kollektorfeldregler. Unter anderem werden zum Beispiel Verbraucherdaten wie ein Wärmebedarf übermittelt. Anhand der übermittelten Daten ermittelt der Kollektorfeldregler eine mögliche Wärmeabnahme des Verbrauchers mit dem entsprechenden Temperaturbedarf. Weiterhin ist es auch möglich, für Großanlagen einen zentralen Energiespeicher vorzusehen und an die zugeordneten Verbraucher anzubinden.

Generell ergibt sich bei einer Absenkung der Warmwassertemperatur in Warmwasserbereitungssystemen, so wie es für die Einbindung von solar erzeugter Wärme günstig ist, über längere Zeiträume jedoch als Nachteil eine mögliche Vermehrung von im Trinkwasser vorhandenen Bakterien. Als Krankheitserreger in Warmwasseranlagen sind insbesondere sogenannte "Legionellen" bekannt. Diese Mikroorganismen können aber abgetötet werden, wenn die Temperatur des Warmwassers kurzzeitig 60 °C bis 80 °C beträgt.

Für eine solche Sterilisation ist beispielsweise aus der DE 38 04 647 C1 eine Aufheizschaltung für einen Warmwasserspeicher bekannt, bei der die Wirksamkeit des Brauchwasserthermostaten in fest eingestellten oder frei wählbaren Zeitabständen während einer festgelegten Zeitspanne unterbunden wird und die Aufheizung des Warmwassers dann durch Kesselwasser erfolgt, welches während der vollen Zeitspanne nur durch den Kesselwassertemperaturregler in seiner Temperaturhöhe begrenzt ist. Damit wird die übliche Temperatur von 40 °C bis 60 °C im Warmwasserspeicher kurzzeitig auf Werte um 80 °C hochgefahren, um sporadisch vorhandene Bakterien abzutöten. Diese Aufheizung kann beispielsweise in regelmäßigen Intervallen von mehreren Tagen oder Wochen erfolgen. Auch gibt es spezielle hydraulische Schaltungen zur thermischen Desinfektion von Warmwasserspeichern, welche hauptsächlich dazu dienen, die notwendige Temperatur im unteren Speicherbereich bereitzustellen. Zum Beispiel kann eine externe Umwälzung des Wassers über eine Verbindungsleitung oder einen Durchlauferhitzer vom oberen zum unteren Speicherbereich erfolgen.

Die DE 4139288 A1 offenbart einen Warnlwasserbereiter mit einer dezentralen Brauchwassemacherwärmung, wobei die Funktionen eines Durchlauferhitzers mit einer Durchflussentkeimung durch Bestrahlung mit ultraviolettem Licht in einer Installationseinheit vereint sind.

Der Erfindung liegt die Aufgabe zugrunde, eine optimierte Solaranlage und ein optimiertes Verfahren zum Betreiben einer Solaranlage, insbesondere zur Warmwasserbereitung, zu schaffen, um eine thermischen Desinfektion sicherzustellen.

Erfindungsgemäß wird dies mit den Merkmalen des Patentanspruches 1 gelöst. Vorteilhafte Weiterbildungen sind den Unteransprüchen zu entnehmen.

Das erfindungsgemäße Verfahren zum Betreiben einer Solaranlage, insbesondere zur Warmwasserbereitung, mit mehreren Solarkollektoren, mindestens zwei Energieverbrauchem, jeweils mit Messeinrichtungen zum Erfassen von Energiedaten der Energieverbraucher, mit einer Regeleinrichtung, mit Verbindungsleitungen für ein Wärmeträgermedium zum Verteilen der zur Verfügung stehenden Energiemenge an die Energieverbraucher sowie wahlweise mit einem Energiespeicher, ist wobei Verbindungsleitungen, Energieverbraucher und/oder Energiespeicher durch Aufheizung des Wärmeträgermediums oder des Warmwassers auf eine Temperatur oberhalb des einstellbaren Solltemperaturwertes eine Funktion zur thermischen Desinfektion durchlaufen. Dabei wird die aus der Solaranlage zur Verfügung stehende Energiemenge erfasst und so auf mindestens einen Energieverbraucher und/oder Energiespeicher verteilt, dass in diesem Anlagenteil eine thermische Desinfektion erfolgt.

Diese thermische Desinfektion erfolgt in vorgebbaren Zeitabständen, beispielsweise einmal in der Woche. Bei der Eingabe der Zeitabstände, in der Regel bei der Installation des Systems, werden insbesondere Anlagenverhältnisse, Betriebssituationen und Nutzerverhalten berücksichtigt.

Anhand der übermittelten Energiedaten der Energieverbraucher und/oder Energiespeicher werden erfindungsgemäß Prioritäten vergeben, wo und wie die thermische Desinfektion ausgeführt wird. Die Solaranlage stellt dabei zunächst die Grundversorgung der Energieverbraucher und/oder Energiespeicher sicher. Es können aber auch ein oder mehrere Energieverbraucher und/oder Energiespeicher abgeschaltet werden, um die thermische Desinfektion an einem anderen Energieverbraucher mit Priorität durchzuführen und dort das erforderliche höhere Temperaturniveau zu erreichen. Eine Abschaltung erfolgt vorteilhafterweise, wenn die Summe des Energiebedarfs aller Energieverbraucher größer ist als die durch die Solaranlage zur Verfügung stehende Energiemenge. Ziel ist es dabei, alle Energieverbraucher und/oder Energiespeicher in einem vorgegebenen Zeitrahmen thermisch zu desinfizieren. Zum Beispiel wird dies an einem ersten Energieverbraucher immer montags, an einem zweiten Energieverbraucher immer dienstags und an einem dritten Energieverbraucher immer mittwochs durchgeführt. Dabei werden Zeitpunkte ausgewählt, die für eine kurzzeitige Abschaltung von Energieverbrauchern und/oder Energiespeichern relativ unkritisch sind, sich also bei einem Nutzer möglichst nicht negativ bemerkbar machen.

Bei einer weiteren Ausführungsform der vorliegenden Erfindung ist vorgesehen, dass die gesamte Solaranlage auf einem gegenüber dem Normalbetrieb erhöhten Temperaturniveau betrieben wird, um die thermische Desinfektion an mindestens einem Energieverbraucher und/oder Energiespeicher durchzuführen. Diese Betriebsart bietet sich in Zeiten mit sehr hohen solaren Erträgen an.

So kann auch eine Verteilung der Energiemenge zu mindestens einem Energieverbraucher mit dem Zweck durchgeführt werden, eine Stagnation der Solaranlage durch Dampfbildung im Kollektor zu verhindern. Dieser Fall tritt ein, wenn die Summe des Energiebedarfs aller Energieverbraucher und/oder Energiespeicher kleiner ist als die durch die Solaranlage zur Verfügung stehende Energiemenge. Es wird dabei versucht, möglichst viel Solarwärme in das Gesamtssystem einzubringen, um die Kollektortemperatur unterhalb der Stagnationsschwelle zu halten. Gleichzeitig wird dieser Betriebszustand für die Durchführung einer thermischen Desinfektion der Verbindungsleitungen, der Energieverbraucher sowie der Energiespeicher genutzt. Entweder erfolgt dies parallel oder einzeln nacheinander.

Ansonsten würden Anlagen gemäß dem Stand der Technik in einen Stagnations-Zustand gefahren. Es würden Kollektor und/oder Verbraucher jeweils Maximalbedingungen, zum Beispiel Maximaltemperaturen, erreichen. Die entsprechenden Anlagen müssten dann abgeschaltet werden und/oder eine Notkühlung würde aktiviert. Befinden sich die Kollektoren erst in einem Zustand mit Übertemperatur und Stagnation, so ist es nahezu unmöglich, die Anlage kurz nach Erreichen der Übertemperatur wieder anzufahren. Dies kann erst wieder erfolgen, wenn die Kollektoren ausgekühlt sind, zum Beispiel während der Nacht.

Zur Durchführung des erfindungsgemäßen Verfahrens sind Messeinrichtungen zum Erfassen von Energiedaten der Energieverbraucher notwendig, genauso wie mindestens eine Übermittlungseinheit zum Übermitteln der Energiedaten an die Regeleinrichtung der Solaranlage, mit der die Auswertung, Überwachung, Einstellung und Regelung erfolgt.

Mit dem erfindungsgemäßen Verfahren stehen eine optimierte Solaranlage und ein optimiertes Verfahren zum Betreiben einer Solaranlage, insbesondere zur Warmwasserbereitung, zur Verfügung, um eine thermische Desinfektion, durch regelmäßige Aufheizung eines Leitungssystems oder eines Warmwasserspeichers auf eine Warmwassertemperatur oberhalb des einstellbaren Sollwertes, sicherzustellen. Dieses ist besonders für Solargroßanlagen mit mehreren Verbrauchern geeignet. Dabei unterscheidet sich der Bedarf der einzelnen Verbraucher in der Regel, so dass von einer heterogenen Verbraucherstruktur gesprochen wird.

Die Besonderheit der Optimierung liegt darin, dass im Falle einer nicht ausreichenden Energie seitens der Regeleinrichtung eine Priorisierung der bereitstellbaren Energiemenge für die thermische Desinfektion vorgenommen wird. Dadurch werden die Energiemengen optimiert verteilt und die thermische Desinfektion wird vorrangig mit kostenlos erzeugter Solarwärme durchgeführt. Es wird damit umgekehrt vermieden, die erforderliche thermische Desinfektion mit aus fossilen Brennstoffen erzeugter Wärme aus anderen Quellen, welche extra in das Gesamtsystem eingebracht werden muss, vorzunehmen. Dies hätte zusätzlich auch ungünstige auf den gesamten Anlagenwirkungsgrad.

Zudem wird mit der vorliegenden Erfindung das Ziel erreicht, prinzipiell alle Nutzer der solare Großanlage möglichst gleichmäßig an der gewonnenen Energie gemäß ihrem individuellen Bedarf zu beteiligen oder aufgrund von Ladezuständen von Energiespeichern der Verbraucher und/oder der teilnehmerspezifischen Energiereserven eine bevorzugte, das heißt nach Prioritäten gesteuerte Versorgung durchzuführen. Auf diese Art kann die Energie zum Beispiel in einem Mehrfamilienhaus optimal und adaptiv verteilt werden. Als Gegenstation zum Kollektorfeldregler kann jede Wohnung einen Verbraucherregler erhalten, der die spezifischen Belange der Wohnung zur Integration der solaren Energie in die dezentrale Heizungsanlage und Warmwasserbereitung - also je nach Ausstattung dieser Funktionseinheit nur Warmwasserbereitung oder auch Warmwasserbereitung und Heizungsunterstützung - ermittelt und die Kommunikation zum Kollektorfeldregler und zum Wohnungsregler übernimmt.

Weiterhin können bei der Installation spezielle Anlagenverhältnisse durch die variable Eingaben von Parametern im Zusammenhang mit der thermischen Desinfektion berücksichtigt werden. Dazu gehören beispielsweise der Wasserinhalt, die Wärmetauschergröße bzw. - anordnung, die Ausführung des angeschlossenen Leitungssystems, die Nutzungsgewohnheiten, die Leistungsfähigkeit der Solaranlage sowie das Gefahrenpotential durch mögliche Keimbildung. Daher kann zum Beispiel einerseits der Mindestwert für die Warmwassertemperatur und die Häufigkeit der thermischen Desinfektion bei einem Speicher für industrielle Brauchwassererwärmung sehr niedrig eingestellt werden, so dass die thermische Desinfektion nur in sehr großen Zeitabständen erfolgt. Andererseits müssen der Mindestwert für die Warmwassertemperatur und andere Kriterien im Zusammenhang mit der thermischen Desinfektion bei einer Warmwasserbereitungsanlage in einem Krankenhaus relativ hoch eingestellt sein, damit die Desinfektion in kurzen Zeitintervallen und mit höheren Temperaturen erfolgt, um jegliches Infektionsrisiko, insbesondere für empfindliche Menschen, auszuschließen.

## Patentansprüche

1. Verfahren zum Betreiben einer Solaranlage, insbesondere zur Warmwasserbereitung, mit einem Solarkollektor, mindestens zwei Energieverbrauchern, mit Verbindungsleitungen für ein Wärmeträgermedium zum Verteilen der zur Verfügung stehenden Energiemenge an die Energieverbraucher sowie wahlweise mit einem Energiespeicher,
**dadurch gekennzeichnet, dass** die Solaranlage mehrere Solarkollektoren und eine Regeleinrichtung beinhaltet, und dass die Energieverbrauchern jeweils mit Messeinrichtungen zum Erfassen von Energiedaten der Energieverbraucher bestattet sind, und dass Verbindungsleitungen, Energieverbraucher und/oder Energiespeicher durch Aufheizung des Wärmeträgermediums oder des Warmwassers auf eine Temperatur oberhalb des einstellbaren Solltemperaturwertes eine Funktion zur thermischen Desinfektion durchlaufen, wobei die aus der Solaranlage zur Verfügung stehende Energiemenge erfasst und mittels einer Abschaltung eines oder mehrerer Energieverbraucher und/oder Energiespeicher auf mindestens einen anderen Energieverbraucher und/oder Energiespeicher verteilt wird, so dass in diesem anderen Anlagenteil eine thermische Desinfektion erfolgt.

2. Verfahren nach Anspruch 1,
**dadurch gekennzeichnet, dass** eine thermische Desinfektion in vorgebbaren Zeitabständen erfolgt.

3. Verfahren nach Anspruch 1 oder 2,
**dadurch gekennzeichnet, dass** anhand der übermittelten Energiedaten der Energieverbraucher und/oder Energiespeicher Prioritäten vergeben werden und dass die Solaranlage die Grundversorgung der Energieverbraucher und/oder Energiespeicher sicherstellt und/oder Energieverbraucher und/oder Energiespeicher abgeschaltet werden, um die thermische Desinfektion an einem Energieverbraucher mit Priorität durchzuführen.

4. Verfahren nach einem der vorherigen Ansprüche 1 bis 3,
**dadurch gekennzeichnet, dass** Energieverbraucher abgeschaltet werden, um die thermische Desinfektion an einem Energieverbraucher und/oder Energiespeicher mit Priorität durchzuführen, wenn die Summe des Energiebedarfs aller Energieverbraucher größer ist als die durch die Solaranlage zur Verfügung stehende Energiemenge.

5. Verfahren nach einem der vorherigen Ansprüche 1 bis 4,
**dadurch gekennzeichnet, dass** die gesamte Solaranlage auf einem gegenüber dem Normalbetrieb erhöhten Temperaturniveau betrieben wird, um die thermische Desinfektion an mindestens einem Energieverbraucher und/oder Energiespeicher durchzuführen.

6. Verfahren nach einem der vorherigen Ansprüche 1 bis 5,
**dadurch gekennzeichnet, dass** die Verteilung der Energiemenge zu mindestens einem Energieverbraucher durchgeführt wird um eine Stagnation der Solaranlage zu verhindern, wenn die Summe des Energiebedarfs aller Energieverbraucher und/oder Energiespeicher kleiner ist als die durch die Solaranlage zur Verfügung stehende Energiemenge.

## Claims

1. Method for operating a solar energy system, in particular for providing hot water, with a solar collector, at least two energy consumers, with connecting lines for a heat transfer medium for distributing the available amount of energy to the energy consumers and also optionally with an energy store,
**characterized in that** the solar energy system comprises a number of solar collectors and a control device, and **in that** the energy consumers are respectively equipped with measuring devices for recording energy data of the energy consumers, and **in that** connecting lines, energy consumers and/or energy store go through a thermal disinfecting function by heating up the heat transfer medium or the hot water to a temperature above the adjustable setpoint temperature value, the amount of energy that is available from the solar energy system being recorded and, by means of switching off one or more energy consumers and/or the energy store, distributed to at least one other energy consumer and/or energy store, so that thermal disinfection takes place in this other part of the system.

2. Method according to Claim 1,
**characterized in that** a thermal disinfection takes place at predeterminable time intervals.

3. Method according to Claim 1 or 2,
**characterized in that** priorities are awarded on the basis of the transmitted energy data of the energy consumers and/or energy store and **in that** the solar energy system ensures the basic supply to the energy consumers and/or the energy store and/or the energy consumers and/or the energy store is/are switched off in order to carry out the thermal disinfection on an energy consumer with priority.

4. Method according to one of the preceding Claims 1 to 3,
**characterized in that** energy consumers are switched off in order to carry out the thermal disinfection on an energy consumer and/or energy store with priority if the sum of the energy demand of all the energy consumers is greater than the amount of energy made available by the solar energy system.

5. Method according to one of the preceding Claims 1 to 4,
**characterized in that** the entire solar energy system is operated at a temperature level that is increased in comparison with normal operation in order to carry out the thermal disinfection on at least one energy consumer and/or energy store.

6. Method according to one of the preceding Claims 1 to 5,
**characterized in that** the distribution of the amount of energy to at least one energy consumer is carried out in order to prevent stagnation of the solar energy system if the sum of the energy demand of all the energy consumers and/or the energy store is less than the amount of energy made available by the solar energy system.

## Revendications

1. Procédé destiné à faire fonctionner une installation solaire, en particulier pour fournir de l'eau chaude, comprenant un collecteur solaire, au moins deux consommateurs d'énergie avec des conduites de connexion pour un fluide caloporteur pour distribuer la quantité d'énergie disponible aux consommateurs d'énergie et le cas échéant un accumulateur d'énergie,
**caractérisé en ce que** l'installation solaire présente plusieurs collecteurs solaires et un dispositif de régulation et **en ce que** les consommateurs d'énergie sont à chaque fois munis de dispositifs de mesure pour détecter des données énergétiques des consommateurs d'énergie, et **en ce que** les conduites de connexion, les consommateurs d'énergie et/ou les accumulateurs d'énergie subissent une fonction de désinfection thermique par chauffage du fluide caloporteur ou de l'eau chaude à une température au-dessus de la valeur de température de consigne ajustable, la quantité d'énergie disponible à partir de l'installation solaire étant détectée et étant distribuée, par le biais d'une coupure d'un ou de plusieurs consommateurs d'énergie et/ou d'accumulateurs d'énergie, à au moins un autre consommateur d'énergie et/ou un autre accumulateur d'énergie de telle sorte qu'une désinfection thermique s'effectue dans cette autre partie de l'installation.

2. Procédé selon la revendication 1,
**caractérisé en ce qu'**une désinfection thermique s'effectue à intervalles prédéfinissables.

3. Procédé selon la revendication 1 ou 2,
**caractérisé en ce qu'**au moyen des données énergétiques transmises des consommateurs d'énergie et/ou des accumulateurs d'énergie, des priorités sont établies et **en ce que** l'installation solaire assure l'alimentation de base des consommateurs d'énergie et/ou des accumulateurs d'énergie et/ou **en ce que** des consommateurs d'énergie et/des accumulateurs d'énergie sont coupés pour effectuer la désinfection thermique en priorité au niveau d'un consommateur d'énergie.

4. Procédé selon l'une quelconque des revendications précédentes 1 à 3,
**caractérisé en ce que** des consommateurs d'énergie sont coupés pour effectuer en priorité la désinfection thermique au niveau d'un consommateur d'énergie et/ou d'un accumulateur d'énergie lorsque la somme des besoins énergétiques de tous les consommateurs d'énergie est supérieure à la quantité d'énergie disponible provenant de l'installation solaire.

5. Procédé selon l'une quelconque des revendications précédentes 1 à 4,
**caractérisé en ce que** l'ensemble de l'installation solaire fonctionne à un niveau de température plus élevé par rapport au fonctionnement normal afin d'effectuer la désinfection thermique au niveau d'au moins un consommateur d'énergie et/ou d'un accumulateur d'énergie.

6. Procédé selon l'une quelconque des revendications précédentes 1 à 5,
**caractérisé en ce que** la distribution de la quantité d'énergie à au moins un consommateur d'énergie est effectuée pour éviter une stagnation de l'installation solaire lorsque la somme des besoins énergétiques de tous les consommateurs d'énergie et/ou de tous les accumulateurs d'énergie est inférieure à la quantité d'énergie disponible à partir de l'installation solaire.
